# FASCICULE DE BREVET EUROPEEN

(11) **EP 3 233 430 B1**
(45) Date de publication et mention de la délivrance du brevet: **28.11.2018**
(21) Numéro de dépôt: 15823610.9
(22) Date de dépôt: 11.12.2015
(51) Int. Cl.: B29C 64/106, B29C 64/236, B29C 64/20, B29C 64/209, E04B 1/16, E04B 1/35, E04G 21/04, B28B 1/00, B33Y 10/00, B33Y 30/00

(54) **DISPOSITIF ET PROCÉDÉ DE FABRICATION DE STRUCTURES TRIDIMENSIONNELLES RÉALISÉES EN COUCHES SUCCESSIVES**
VORRICHTUNG UND VERFAHREN ZUR HERSTELLUNG VON IN AUFEINANDERFOLGENDEN LAGEN ERZEUGTER DREIDIMENSIONALER STRUKTUREN
DEVICE AND METHOD FOR PRODUCING THREE-DIMENSIONAL STRUCTURES CREATED IN SUCCESSIVE LAYERS

(30) Priorité: 16.12.2014 FR 1402869
(43) Date de publication de la demande: 25.10.2017
(73) Titulaire: ROCHER, Xavier, 78400 CHATOU (FR)
(72) Inventeur: ROCHER, Xavier, 78400 CHATOU (FR)
(74) Mandataire: Domange, Maxime
(86) Numéro de dépôt international: PCT/FR2015/000226
(87) Numéro de publication internationale: WO 2016/097498

(56) Documents cités:
- EP-A1- 1 872 928
- WO-A2-2005/097476
- US-A1- 2013 292 039

## Description

La présente invention est relative à un dispositif et un procédé de fabrication de structures tridimensionnelles à partir de produits pâteux ou plastiques étalés en couches minces, de préférence en couches planes superposées.

Ce type de dispositif est plus particulièrement connu sous le nom générique d' « imprimante 3D ».

La présente invention est plus particulièrement destinée à la fabrication de structures tridimensionnelles de très grandes dimensions, et en particulier dans le domaine de la construction de bâtiments en dur, c'est à dire en mortiers comportant un liant hydraulique, tels de la chaux ou du ciment, allégés ou non, de préférence des mortiers isolants et résistants, de préférence fibrés.

On entend ici par « structure » dans le domaine des imprimantes 3D des prototypes ou des petites séries de pièces telles que des éléments de pompes, des statuettes, des flacons, ou tout autre pièces qui étaient dans le passé moulées ou fabriquées intégralement à la main et qui grâce à ces machines sont conçues par des ordinateurs sous forme de modèles 3D numériques et réalisés de manière entièrement automatique, couche par couche par ladite imprimante 3D.

Dans le domaine de la construction, il s'agira de la réalisation de bâtiments, par exemple des pavillons, des immeubles, des entrepôts ou tout autre type de construction nécessitant des structures solides et rapides à construire.

Les techniques de construction ont beaucoup évolué ces dernières décennies, et l'on a toujours recherché la simplification et l'automatisation de manière à augmenter la qualité des produits finis tout en réduisant les coûts et les délais de fabrication.

On connaît le principe des imprimantes 3D qui consiste à concevoir un objet de manière volumique, puis à le fabriquer couche par couche. Pour ce faire, on coupe le modèle numérique 3D en tranches parallèles d'épaisseur constante et la machine dépose successivement, couche par couche la matière pâteuse ou liquide sur chacun des plans, et ce de manière quasi-continue. Selon les techniques, la matière est déposée sur la couche précédente soit sous forme de gouttelettes, soit sous forme de fil de matière plastique fondue et distribué par une tête d'injection, soit encore par fusion par un rayon laser d'une mince couche de poudre thermo-fusible préalablement déposée, ou par polymérisation d'un film liquide par un rayon laser.

On recherche en général une bonne qualité de l'objet fini, ce qui conduit à réaliser des couches minces qui dans certains cas peuvent être de l'ordre du centième de mm, ce qui nécessite un temps de réalisation important, pour réaliser des pièces de quelques décimètres cube.

Cette technique a été utilisée récemment pour tenter de fabriquer de la même manière, couche par couche, des éléments de construction, des petits bâtiments à l'aide de dispositifs robotisés soit de type portique, soit de type robots SCARA, ou encore de robots de type hexapodes, connus de l'homme de l'art.

Tous ces dispositifs sont opérés de manière automatique à partir d'un contrôleur à commande numérique, connu de l'homme de l'art dans le domaine de la robotique et nécessitent de ce fait que peu de main d'oeuvre lors de la réalisation de la structure.

Ces techniques sont bien adaptées pour la préfabrication d'éléments en atelier ou la réalisation de petits ouvrages mais, dès lors que les dimensions augmentent, c'est à dire au delà de 5m, voire 10m, les dispositifs deviennent très importants, car ils doivent être très précis et donc très rigides.

On connaît le brevet FR2739887 du demandeur qui décrit un dispositif qui permet de positionner en deux dimensions à l'aide de câbles un outil sur une paroi immense, et plus particulièrement sur une façade d'ouvrage, plane ou légèrement courbée.

On connaît les dispositifs utilisés depuis plus d'une décennie pour déplacer sur un stade, au dessus des joueurs ou des concurrents, une caméra de manière à suivre de près les performances des sportifs. Le dispositif est constitué des quatre pylônes situés en général aux angles du stade, au sommet desquels sont installés des treuils rapides pilotés de manière connue en commande numérique, lesdits treuils étant reliés à la caméra par des câbles fins, en général en Kevlar, l'ajustement de la longueur de chacun des câbles permet de positionner de manière correcte la caméra dans un plan pour obtenir les images recherchées. En pilotant l'ensemble des treuils en temps réel, on peut lui faire parcourir une surface couvrant la quasi-intégralité du stade à des vitesses parfois impressionnantes.

Le positionnement de la caméra ainsi réalisé manque beaucoup de précision, car les câbles sont extrêmement tendus pour que la caméra puisse rester au dessus des athlètes. L'altitude de ladite caméra n'est en général pas très bien maîtrisée et plusieurs incidents, plus particulièrement des collisions avec les athlètes ont été rapportées dans les médias. Dans cette application, la précision n'a pas vraiment d'importance, car le but recherché est de positionner approximativement la caméra pour obtenir les images saisissantes recherchées.

On connaît le brevet US-2013/0292039 qui décrit un dispositif de fabrication de structures 3D similaire aux caméras décrites précédemment, les motorisations des câbles ainsi que la tête d'injection et le stock de matière étant disposés au niveau de la tête mobile en déplacement. Dans cette application, les tensions dans les câbles sont considérables voire rédhibitoires dès lors que l'on cherche à fabriquer des éléments de grandes dimensions, car l'intégralité des efforts verticaux sont repris par les câbles reliés aux pylônes fixes.

On connaît les brevets WO-2005/097476 et EP-1-872-928 qui décrivent un portique cartésien tridimensionnel de fabrication de structures tridimensionnelles de grandes dimensions. Dans cette application, les poutres horizontales du portique tridimensionnel de fabrication doivent avoir une résistance, donc une inertie très importante de manière à limiter la flèche sous charge pour que les déplacements soient précis et répétitifs. Ces dispositifs sont plus particulièrement décrits comme étant destinés à des préfabrications en usine d'éléments de structure. Dans ce cas, la modularité ainsi que le poids considérable des divers éléments ne sont pas adaptés à une utilisation directe sur le site de construction de l'édifice, car le matériel doit pouvoir être facilement déplacé de chantier en chantier.

La présente invention vise à obtenir un positionnement d'une précision extrême dans les trois dimensions XYZ et plus particulièrement dans la direction verticale Z, la plus délicate à maîtriser dès lors que les dimensions de la structure sont importantes, voire immenses. La présente invention permet de s'affranchir d'installations conventionnelles de type échafaudage ou de structures lourdes de type portique, étant entendu que de tels dispositifs doivent être extrêmement rigides pour assurer un positionnement précis.

Un but de la présente invention est de fournir un dispositif industriel de fabrication de structures de grandes dimensions automatisé.

La présente invention est un dispositif de dépôt de matériau pâteux destiné à la fabrication couche par couche d'une structure tridimensionnelle de grandes dimensions conformément à la revendication 1.

Selon un mode de réalisation de l'invention, au moins un des premiers supports est un pylône (P), sensiblement vertical, ancré dans ledit sol, supportant un premier treuil (M).

On comprend que les premiers supports supportant les premiers treuils ne sont pas nécessairement au même niveau les uns les autres, qu'ils peuvent être situés en hauteur solidaires d'un bâtiment existant, ou être constitués de pylônes.

Selon un mode de réalisation de la présente invention, le deuxième support (5b) constitue la flèche d'une grue à tour (5) ancrée dans le sol (10), la dite flèche supportant le dit premier chariot et étant mobile en rotation par rapport à la tour.

Dans une variante de l'invention, la poutre (20b-5b) constitue la poutre sensiblement horizontale d'un portique (20) mobile selon l'axe horizontal YY, de préférence perpendiculaire à l'axe XX de la poutre.

Dans une variante préférée de l'invention, l'actionnement des trois premiers dispositifs de tensionnement et, de préférence l'actionnement dudit deuxième dispositif de tensionnement et de préférence encore le déplacement dudit premier chariot, sont pilotés en commande numérique depuis un poste de commande (8) pour déplacer ledit point de dépose.

Selon un mode de réalisation de l'invention, la verticalité du câble de suspension (4a) est assurée par ajustement des déplacements du premier chariot (3) le long de la dite poutre et/ou déplacement de la dite poutre dans un plan horizontal en translation et/ou rotation, de préférence pilotés en commande numérique depuis un poste de commande (8).

Dans une variante de l'invention, la verticalité du câble de suspension (4a) est assuré par ajustement de la position dans le plan horizontal XY du premier chariot (3), sur la base d'informations issues de deux inclinomètres (11) solidaires dudit câble de suspension (4a) ou de la conduite (2a), lesdits inclinomètres étant situés dans deux plans verticaux de référence, de préférence perpendiculaires l'un à l'autre.

Ainsi, la verticalité du câble de suspension (4a) est assuré par ajustement de la position du chariot correspondant sensiblement au même couple de valeurs de coordonnées cartésiennes xy ou de valeurs en coordonnées polaires de (p) et de l'angle (ϕ) correspondant au couple de valeurs xy.

Dans une autre variante de l'invention, la conduite d'amenée (2b) est suspendue audit premier câble de suspension (4a) par l'intermédiaire d'un support de guidage du type dispositif en col de cygne, et la tête de dépose comprend une buse supportée par un support-guide (6) relié aux dits câbles de positionnement (7).

Selon un mode de réalisation de l'invention, le premier treuil (4) est à tension contrôlée et supporte 40 à 95%, de préférence 70 à 85% du poids cumulé de la portion de conduite d'amenée (2b) en suspension sensiblement verticale remplie de produit pâteux, du support-guide (6) et de la buse (2a), et le cas échéant du col de cygne (4b), du câble de suspension (4a), et d'une portion de conduite (2b) en configuration de guirlande.

On comprend que le premier treuil peut ne supporter que la conduite d'amenée 2b, le support-guide 6 et la buse 2a, le col de cygne et le câble de suspension n'existant pas dans certaines variantes.

Selon une variante préférée de l'invention, l'on installe au moins quatre pylônes (P) respectivement équipés d'une pluralité de quatre premiers treuils (M), lesquels sont respectivement reliés à une dite tête de dépose (2a) par une pluralité de câbles, trois câbles de ladite pluralité de câbles jouant de manière séquentielle le rôle de câbles de positionnement tendus, les autres câbles jouant le rôle de câbles secondaires non tendus.

Selon une variante préférée de l'invention, la conduite d'amenée (2b1) contourne le support guide (6-6a), ce dernier présentant un orifice axial de faible diamètre (6a1) où convergent l'ensemble des câbles de positionnement (7).

L'invention consiste également un procédé de fabrication de structures tridimensionnelle à partir de produits pâteux déposé à l'aide d'un dispositif selon l'invention, conformément à la revendication 13.

Le procédé est plus particulièrement destinée à la fabrication de structures de plus petite dimension dans un plan horizontal d'au moins 5 m, de préférence au moins 10m pour la construction de bâtiments en dur.

Selon un mode de réalisation, le dit matériau pâteux est un mélange de produits inertes tels de l'argile, du sable, de la paille, des fibres de renfort, en plastique ou en acier, et comportant de préférence un liant hydraulique, tel un ciment pour former un mortier résistant, allégé ou non, et de préférence isolant. Dans une variante de l'invention, le dit matériau pâteux comporte un matériau thermo-fusible ou thermodurcissable, mono ou multi-composants.

D'autres caractéristiques et avantages de la présente invention apparaîtront à la lumière de la description détaillée des modes de réalisation qui va suivre, en référence aux figures 1 à 5 :
- la figure 1 est une vue de côté d'un bâtiment en construction à l'aide d'un dispositif selon un mode de réalisation de l'invention comportant une grue à tour, trois treuils installés respectivement au sommet de trois pylônes et respectivement trois câbles reliant une tête d'injection de mortier soutenue par le chariot mobile de la flèche de grue, une conduite souple amenant le mortier,
- la figure 2A est une vue de côté du dispositif selon un mode de réalisation de l'invention en cours de préparation, illustrant des moyens de stabilisation des pylônes, des haubans ainsi que des tirants reliant le sommet desdits pylônes, dans laquelle un treuil motorisé solidaire du chariot mobile, supporte la tête d'injection ainsi que la conduite souple amenant le mortier,
- la figure 2B est une variante de la figure 2A, dans laquelle ledit chariot mobile supporte un simple jeu de poulies, le câble tourné autour desdites poulies étant relié à un contrepoids,
- la figure 3 est une vue en plan en vue de dessus relative à la figure 1 illustrant la construction des murs et cloisons intérieures d'un bâtiment, trois câbles étant actifs 7-1, 7-2 et 7-3, c'est à dire étant des câbles de positionnement, les câbles 7-4, 7-5 et 7-6 étant des câbles secondaires, donc inactifs dans le positionnement à l'instant considéré,
- la figure 4 est une vue de côté d'un dispositif selon un mode de réalisation de l'invention dans lequel les motorisations se déplacent le long des pylônes de telle manière que les câbles de positionnement restent sensiblement dans un plan horizontal,
- la figure 5 est une vue de côté d'un dispositif selon un mode de réalisation de l'invention dans lequel la grue à tour est remplacée par un portique se déplaçant sur des rails,
- la figure 6 est une vue de côté d'un dispositif selon un mode de réalisation de l'invention dans lequel les treuils sont installés sur des bâtiments existants, la conduite d'amenée étant suspendue à un point fixe,
- la figure 7 est une vue de côté d'un guide support muni d'oreilles d'accrochage des câbles de positionnement,
- les figures 8A à 8D représentent une variante des moyens d'accrochage des câbles de positionnement au guide support 6.

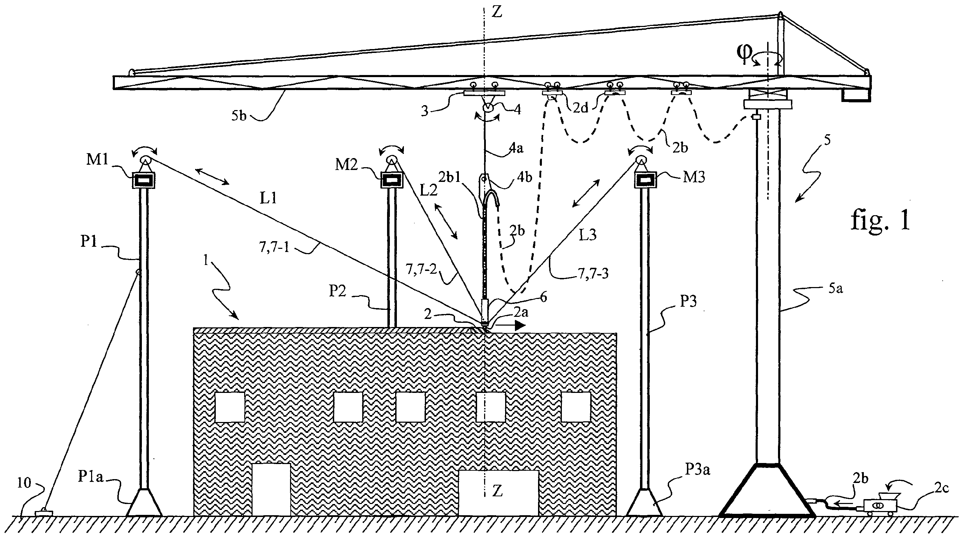

Sur la figure 1 on a représenté en vue de côté un bâtiment 1 en cours de construction à l'aide d'un dispositif selon un mode de réalisation de l'invention. Le dispositif comprend :
- une grue à tour 5 comportant un fût 5a, une flèche 5b, un premier chariot mobile 3 en sous-face de ladite flèche 5b apte à se déplacer en translation dans la direction axiale de ladite flèche, sensiblement horizontale, et
- trois pylônes P1-P2-P3, positionnés en triangle à proximité de la tour de telle manière que la rotation de la flèche 5b permette au chariot mobile 3 de surplomber au moins la surface délimitée par lesdits pylônes, et
- une buse 2a suspendue au premier chariot 3 au moyen d'un câble 4a relié à un treuil 4 solidaire dudit premier chariot 3, et
- une conduite d'amenée de mortier 2b équipée à son extrémité inférieure d'une buse 2a de dépôt de mortier 2, ladite conduite étant reliée à un support de type col de cygne 4b assurant localement le supportage de la conduite d'amenée 2b du mortier en position sensiblement verticale, la suite de la conduite est suspendue en guirlande à une pluralité de seconds chariots 2d mobiles en translation en sous-face le long de ladite flèche 5b vers le pylône 5a de la grue à tour, puis descend de préférence à l'intérieur dudit pylône et ressort en pied de pylône où elle est reliée à ladite pompe à mortier 2c.

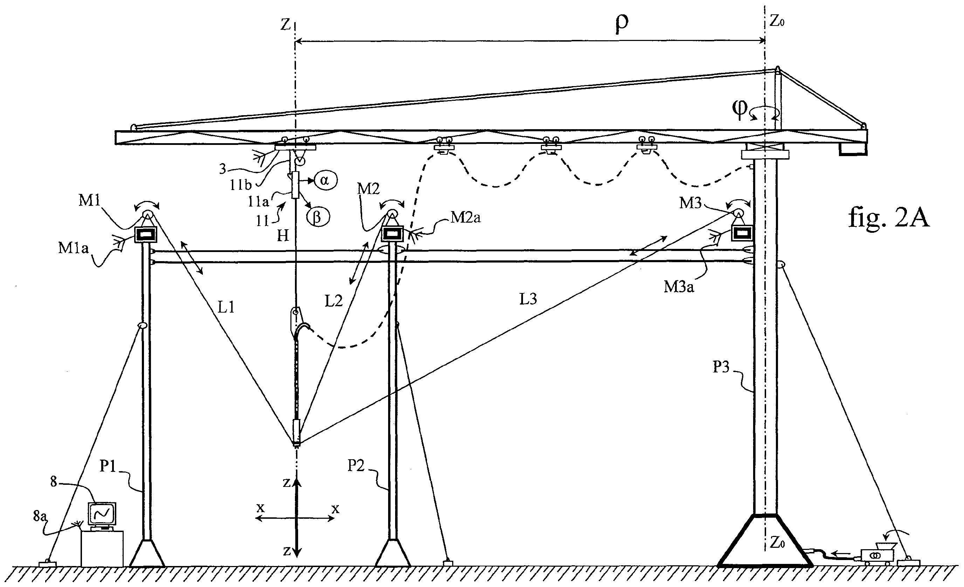

La buse 2a est solidaire d'un guide 6 relié à trois câbles 7-1, 7-2 et 7-3, ces derniers étant reliés à l'autre extrémité respectivement à trois treuils M1, M2 et M3 situés, de préférence à même hauteur, respectivement au sommet de trois pylônes P1, P2 et P3 ancrés dans le sol 10 respectivement en P1a, P2a et P3a. L'actionnement de chacun des treuils M1-M2-M3 est piloté en commande numérique depuis un poste de contrôle 8 représenté sur la figure 2A, l'alimentation en puissance électrique des treuils, non représentée, cheminant respectivement le long de chacun des pylônes, les instructions d'actionnement des treuils et de mouvement de la buse 2a sont transmise soit par câble blindé ou fibre optique, soit de préférence par radio comme représenté sur ladite figure 2A au niveau des antennes M1a, M2a & M3a pour piloter respectivement les treuils M1, M2 et M3, les ordres de positionnement étant émis par l'antenne 8a du contrôleur de commande 8. Ainsi, on ajuste depuis le contrôleur 8 la longueur L de chacun des câbles 7-1, 7-2 et 7-3, à savoir L1-L2-L3, entre le guide support 6 et respectivement chacun des treuils M1-M2-M3. Ainsi, le point de concours desdits trois câbles est situé sensiblement à l'axe longitudinal du guide support 6, et définit de manière univoque un point précis dans l'espace de coordonnées xyz, ledit point de concours des trois câbles étant situé en dessous du plan des trois dits treuils. Ainsi, on peut déplacer le guide 6, donc la tête d'extrusion ou buse 2a dans toutes les directions c'est à dire les trois directions X, Y et Z en ajustant la longueur respective L1-L2-L3 de chacun des trois câbles 7-1, 7-2 et 7-3 depuis le poste de contrôle 8.

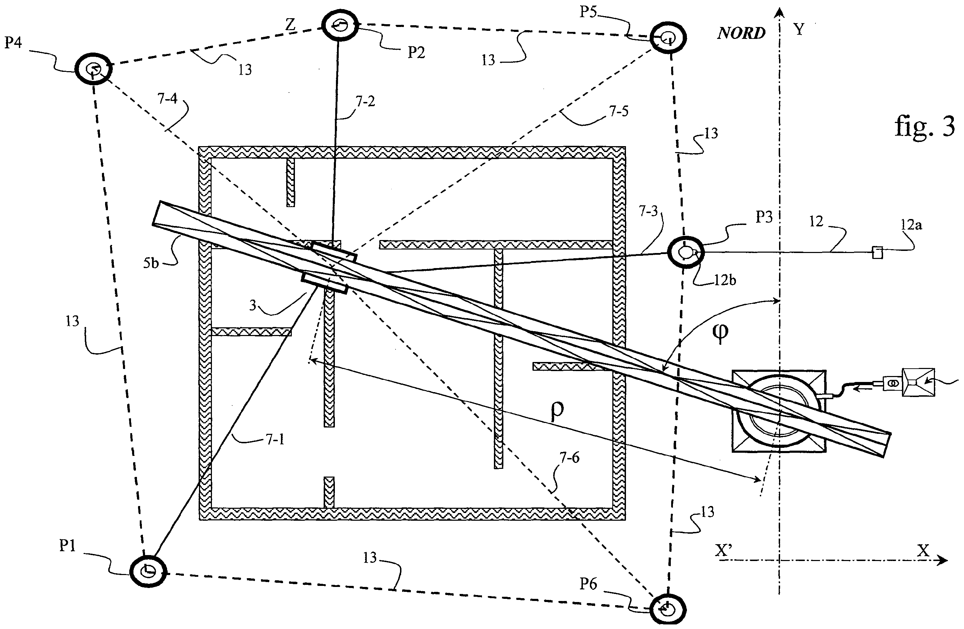

Sur la figure 3, on a représenté en plan en vue de dessus le bâtiment en cours de construction. La tête d'extrusion, non visible car située sous la flèche 5b de la grue 5 et sous le premier chariot 3, est positionnée de manière univoque dans l'espace, par l'ensemble des trois câbles 7-1, 7-2 et 7-3. Dans cette configuration, la tête d'extrusion ou buse 2a ne peut être déplacée que dans l'intérieur du triangle formé par les trois pylônes P1-P2-P3. C'est pourquoi on rajoute une pluralité de pylônes, de treuils et de câbles additionnels, à savoir trois pylônes P4-P5-P6 disposés de telle manière que le polygone engendré par l'ensemble des pylônes contienne l'intégralité du bâtiment à construire. Seuls trois de l'ensemble de ces câbles seront utilisés pour le positionnement de précision de la buse 2a, selon la zone de construction de la structure.

A cet effet, il convient de considérer deux types de fonction, donc de statut, pour chacun desdits câbles :
- d'une part des câbles dits « câbles de positionnement » : tels les câbles 7-1, 7-2 & 7-3 dans le cas de cette figure 3 qui assurent de manière univoque le positionnement dans l'espace de la tête d'extrusion 2a sur une surface limitée à l'intérieur du cylindre d'axe vertical ZZ et de section triangulaire formée sensiblement par les trois pylônes P1-P2-P3, et
- d'autre part des câbles dits « câbles secondaires » car ne participant pas au positionnement dans l'espace, tels les câbles 7-4, 7-5 et 7-6 dans le cas de cette figure 3, lesdits câbles n'étant dans ce cas pas tendus, donc restant légèrement mous,
- lors du processus de positionnement de la buse 2a sur l'ensemble de la surface du bâtiment, chacun des câbles est amené à changer de statut, étant entendu qu'en tout point de l'espace de construction, la tête d'extrusion ou buse 2a est positionnée par trois câbles de positionnement sélectionnés de manière séquentielle dans l'ensemble des câbles, les autres câbles ayant alors de manière provisoire le statut de câble secondaire.

On entend ici par câble secondaire à l'état non tendu, c'est à dire câble mou, que la longueur L donnée audit câble par le contrôleur de commande 8 est légèrement supérieure à la longueur théorique Lₜ calculée pour que ledit câble soit de type câble de positionnement. Par exemple, on ajustera le mou du câble à une valeur de 2 à 10cm, c'est à dire que la longueur effective dudit câble secondaire sera alors ajustée à la valeur L=Lₜ + 2 à 10cm. Il ne sera alors plus en tension et ne participera donc pas au positionnement durant cette séquence. Lorsque ce même câble changera de statut, c'est à dire redeviendra câble de positionnement, sa longueur sera ajustée à la valeur L=Lₜ. Le câble sera alors en tension et donc deviendra l'un des trois câbles participant au positionnement durant cette nouvelle séquence.

On notera que sur cette figure 3, on aurait pu limiter le nombre de pylônes à quatre, le polygone P1-P4-P5-P6 contenant intégralement le bâtiment à construire. Il est possible d'atteindre n'importe quel point de la construction avec ce nombre limité de pylônes. Cependant, dans certains cas, pour des raisons de précision dans le positionnement, on rajoutera avantageusement des pylônes supplémentaires pour faciliter la construction, par exemple dans le cas de bâtiments de grande longueur, c'est à dire deux, trois ou quatre fois plus longs que larges.

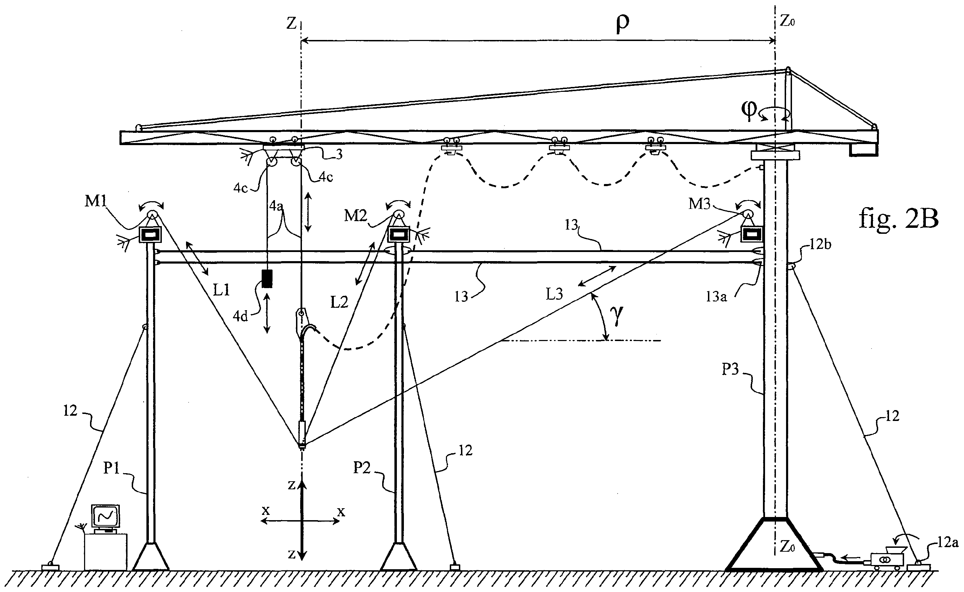

Sur la figure 2B, le premier chariot 3 est équipé d'un jeu de poulies folles 4c autour desquelles est tourné le câble 4a, à l'extrémité inférieure gauche duquel est fixé un contrepoids 4d qui compense partiellement le poids du col de cygne 4b, de la conduite d'amenée de mortier 2b et du guide 6, par exemple entre 70 et 85% du poids total, ce poids global variant selon l'altitude Z du plan de travail et la position en XY. Le pourcentage restant de poids total étant repris par la tension dans les trois dits câbles de positionnement, cette tension assurant la précision dudit positionnement.

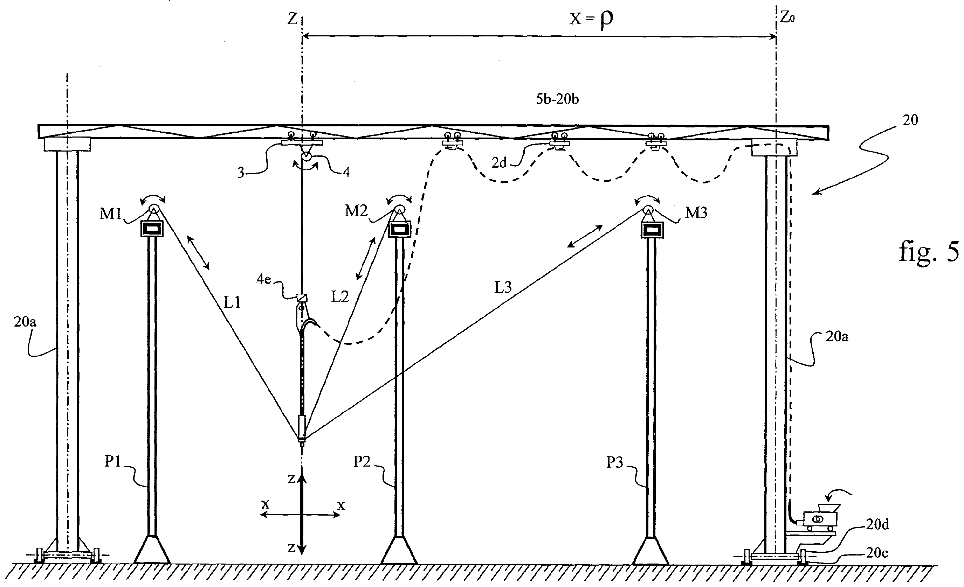

Le tensionnement peut être avantageusement contrôlé par un capteur de force 4e compris entre l'extrémité inférieure du câble de suspension 4a et le col de cygne 4b tel que représenté sur la figure 5, la valeur mesurée de la force permet alors d'ajuster le couple du treuil 4, donc la tension dans ledit câble de suspension 4a.

L'ajustement de la verticalité du câble est avantageusement réalisée par le contrôleur de commande 8. A cet effet, la position xyz de la tête d'extrusion 2a étant connue, on ajuste avantageusement les valeurs des paramètres de la grue à tour, à savoir les coordonnées polaires ρ et ϕ pour qu'ils correspondent très exactement aux coordonnées xy de ladite tête d'extrusion. A cet effet, la rotation de la grue (angle ϕ) ainsi que la position ρ du premier chariot le long de la flèche 5b sont pilotées de manière connue par ledit contrôleur de commande 8.

Dans une variante préférée de l'invention, la verticalité du câble 4a est ajustée par un double inclinomètre 11 décrit sur la figure 2A. Il est constitué d'un tube 11a entourant à jeu réduit le câble 4a, de telle manière qu'il permette les mouvements verticaux dudit câble 4a. Ledit tube 11a est suspendu au premier chariot 3 et maintenu dans le plan vertical de la flèche de grue 5b, sans pouvoir tourner autour de son axe vertical ZZ. Un premier inclinomètre α mesure l'angle du câble 4a par rapport à la verticale dans le plan vertical contenant la flèche de grue 5b, c'est à dire dans le plan de la figure 2A. Un second inclinomètre β mesure l'angle du câble 4a par rapport à la verticale dans le plan perpendiculaire au plan vertical contenant la flèche de grue 5b, c'est à dire dans le plan vertical perpendiculaire au plan de la figure 2A. Ces deux angles étant mesurés, on agit sur la cordonnées polaire ρ du premier chariot 3 pour ramener la valeur de l'angle α à zéro, c'est à dire que l'on déplace ledit premier chariot vers l'avant ou vers l'arrière. De la même manière, on agit sur la cordonnées polaire ϕ de la flèche de grue pour ramener la valeur de l'angle β à zéro, c'est à dire que l'on fait tourner la flèche de grue soit dans le sens des aiguilles d'une montre, soit dans le sens contraire. En ajustant en permanence les coordonnées polaires du premier chariot 3 en fonction des valeurs α et β, le câble 4a se trouve en permanence dans la position sensiblement verticale recherchée.

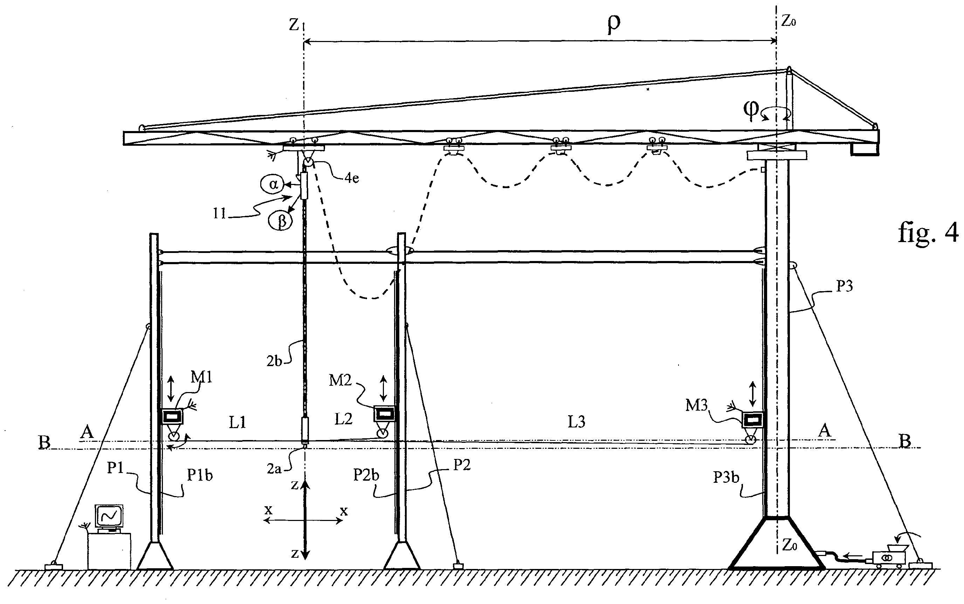

Sur la figure 4, on a représenté une conduite d'amenée 2b reliant la tête de dépose 2a à une poulie motorisée 4e solidaire du chariot 3, et ressortant de ladite poulie 4e pour former la guirlande en suspension sous la poutre 5b. La conduite d'amenée 2b est maintenue en tension par ladite poulie motorisée et l'inclinomètre 11 est alors installé directement sur ladite conduite d'amenée et coulisse à jeu réduit sur cette dernière.

Sur la figure 4, on a représenté en vue de côté une variante de l'invention, dans laquelle les trois câbles dimensionnants sont situés sensiblement dans un même plan horizontal. Les treuils M1-M2-M3 étant alors mobiles verticalement le long l'une crémaillère P_{b} solidaire de chacun des pylônes P. Le dispositif travaillant plan par plan, lorsque l'on change d'altitude Z, on déplace l'ensemble des treuils vers le haut de telle manière que l'ensemble des câbles, à savoir les câbles de positionnement et les câbles secondaires, restent sensiblement dans un même plan. Dans ce cas il convient de considérer que deux des trois câbles dimensionnants servent de fait au positionnement, le troisième étant sous tension et assurant le positionnement dans le plan AA ; les autres câbles ont alors le statut de câbles secondaires et sont maintenus mous, c'est à dire sans tension significative.

Ainsi, dans cette variante décrite en référence à la figure 4, on se retrouve dans une configuration plane similaire à un positionnement par câbles sur une façade en deux dimensions, l'intégralité du poids du col de cygne 4b, de la conduite d'amenée de mortier 2b et du guide 6 étant supporté par le treuil 4 solidaire du premier chariot 3. L'ajustement de la longueur de câble 4a permet alors de maintenir l'extrémité de la tête d'extrusion ou buse 2a, dans le plan BB de dépose de mortier.

Cette variante de l'invention nécessite la mise en oeuvre de multiples ensembles - pylône, crémaillère et treuil - déplaçable verticalement donc plus compliqués à construire et à piloter, et de ce fait ne constitue pas une variante préférée de l'invention.

Sur la figure 5, la grue à tour est remplacée par un portique 20 constitué par deux piliers 20a sensiblement verticaux, reliés entre eux par une poutre horizontale 20b supportant le premier chariot 3 ainsi que les seconds chariots 2d supportant la conduite d'amenée de mortier 2b en configuration de guirlande. Les piliers 20a du portique se déplacent selon l'axe YY perpendiculaire au plan XZ de la figure, au moyen de roues motorisées 20d roulant sur des rails 20c. En ajustant de manière contrôlée la position y du portique sur l'axe YY, ainsi que la position p=x du premier chariot 3 le long de la poutre 20b, on maintient le câble 4a en position sensiblement verticale, de la même manière que précédemment décrit en référence aux figures 1 à 4. Cependant, le déplacement couche par couche de la tête d'extrusion ou buse 2a sur l'intégralité de la surface du bâtiment à construire nécessite des mouvements permanents de l'intégralité du portique. Un tel portique sera de dimensions considérables, tant en hauteur qu'en largeur, et devra présenter une rigidité importante pour pouvoir être déplacé sans danger, et surtout pour pouvoir résister à des vents importants, même à l'arrêt en cas de tempête. Il sera donc d'une masse considérable qu'il conviendra de déplacer dans des mouvements incessants avec des motorisations d'une puissance considérable. De ce fait, cette variante de l'invention ne constitue pas une variante préférée de l'invention.

Avantageusement, comme représenté sur les figures 2B et 3, la rigidité d'ensemble des pylônes est considérablement améliorée par l'installation de haubans 12 ancrés au sol en 12a à une extrémité et à l'autre extrémité en 12b sur chacun des pylônes P, de préférence dans le tiers supérieur dudit pylône P. De même, les pylônes P sont solidarisés entre eux, de préférence en tête de pylône par des tirants 13 installés entre chaque paire de pylônes adjacents du polygone formé par l'ensemble des pylônes. Chaque tendeur 13 est solidarisé à chacun des pylônes en 13a à chacune de ses extrémités. Sur ces figures, les moyens de tensionnement des haubans 12 et des tirants 13 ne sont pas représentés. Sur la figure 3, un seul hauban a été représenté sur le seul pylône P3.

Pour que l'effet de positionnement, c'est à dire l'effet de centrage des câbles de positionnement soit optimal, comme représenté sur la figure 2B, l'angle γ de chacun des câbles de positionnement 7 par rapport à l'horizontale doit être compris entre 10° et 80°, de préférence compris entre 25° et 70°. En effet, pour des angles de l'ordre de 10°, le poids propre des éléments supportés par le câble 4a crée, par décomposition des forces dans les trois câbles de positionnement, des efforts considérables dans chacun d'eux qui vont à l'encontre du but recherché, c'est à dire grande précision et efforts limités. De même, pour des angles de l'ordre de 80°, la décomposition des forces dans les trois câbles de positionnement, crée des efforts faibles, voire très faibles, qui réduisent considérablement l'effet de centrage, donc la précision du positionnement.

Sur les figures 2A, 2B et 4, on utilise avantageusement le fût 5a de la grue 5 pour remplir la fonction de pylône P3.

A titre d'exemple, pour construire un bâtiment de 15 m de hauteur, de 15m de longueur et 12 m de largeur, on installe une grue à tour, de préférence une grue à montage automatisé de type Manitowoc-Potain (France) modèle IGO 21 possédant une hauteur sous crochet de 19 m et une flèche de 26 m de longueur, ou un modèle plus important tel le modèle IGO 50 possédant une hauteur sous crochet de 23 m et une flèche de 40 m de longueur.

Cette grue est modifiée au niveau de son chariot support de crochet que l'on équipe d'un codeur linéaire pour pouvoir ajuster de manière automatique la distance ρ, ainsi qu'un codeur rotatif sur l'axe sensiblement vertical du fût de ladite grue pour ajuster l'angle ϕ dudit fût par rapport au nord représenté sur la figure 3. Six pylônes P1-P6 de 18 m de hauteur, sont disposés comme illustré sur la figure 3 et équipés de treuils à commande numérique situés en tête de pylône. Les câbles de positionnement reliant le guide de tête d'extrusion à chacun desdits treuils ont un diamètre de 4mm, de préférence 3, voire 2 mm. Le guide 6 et la tête d'extrusion ou buse 2a pèsent environ 5 à 10kg. Le câble de suspension 4a est un câble 6mm de diamètre, relié au premier chariot 3 par l'intermédiaire du col de cygne 4b supportant la conduite d'amenée du mortier 2b, cette dernière étant constituée d'une conduite souple de 30 mm de diamètre intérieur pesant sensiblement 2.5 kg/ml lorsqu'il est plein de mortier.

Le dispositif dépose alors selon le tracé sélectionné une couche d'épaisseur de 1 à 4cm à une vitesse continue de 0.1 à 0.25 m/s.

Les câbles de positionnement et les câbles secondaires 7 sont de faible diamètre, car les efforts requis sont très faibles pour maintenir dans une position extrêmement précise la tête d'extrusion ou buse 2a durant toute la durée de processus de construction. De même, le câble 4a supportant tout ou partie de la charge verticale du col de cygne, d'une partie de la conduite, du guide 6 et de la tête d'extrusion 2a, sont de faibles diamètre car les efforts en question sont très réduits.

Les efforts très faibles, quelques kgs, voire quelques dizaines de kgs, dans les câbles de positionnement 7 engendrent en tête des pylônes P des efforts très limités, donc des flexions très faibles ce qui garantit une grande précision dans le positionnement de la tête d'extrusion 2a dans les trois dimensions X-Y-Z. De plus, les câbles de positionnement étant de très faible diamètre, ils sont quasi-insensibles au vent, et leur poids linéaire étant lui aussi très faible, ils sont en quasi ligne droite entre le treuil M et la tête d'extrusion 6, ce qui garantit une rigidité extrême de l'ensemble et donc une précision extrême dans le positionnement de ladite tête d'extrusion 2a que l'on peut ainsi déplacer de manière parfaitement contrôlée pour réaliser, couche par couche, l'ensemble des murs et cloisons du bâtiment tel que décrit sur cette même figure 3.

Cette invention a été décrite dans le cas de construction de bâtiments de grandes dimensions, mais elle est très intéressante pour la réalisation de tous types de constructions à partir de produits pâteux ou plastiques présentant une cohésion suffisante après quelques secondes, voire quelques minutes de manière à procéder couche par couche, de préférence par couches sensiblement horizontales, de telle manière que la couche réalisée soit suffisamment ferme lorsque la couche suivante est appliquée. Ainsi, on évite les effondrements localisés ou complets de la structure et la structure peut être réalisée de manière automatique et continue avec un minimum de personnel, ce qui permet de réduire considérablement les coûts de construction.

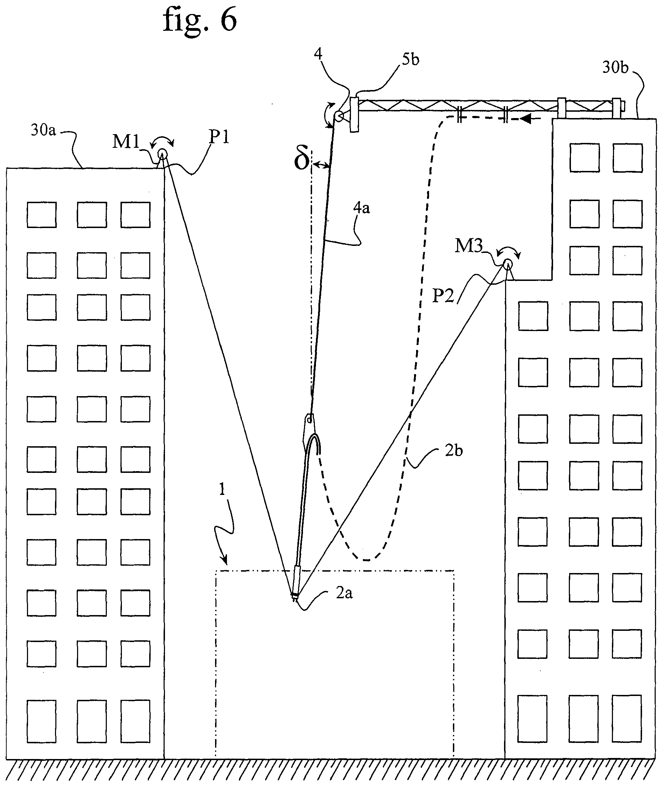

Dans une variante de l'invention représentée sur la figure 6, la structure à construire se trouve comprise entre deux bâtiments 30a et 30b dont on utilisera avantageusement les points les plus hauts et les plus distants desdits bâtiments existants pour installer les supports de treuils M. De tels points d'ancrage présentent un grand avantage en termes de rigidité et de simplicité, par rapport aux pylônes P décrits précédemment.

Dans une autre variante de l'invention représentée sur la même figure 6, le câble de suspension 4a et son système de tensionnement 4 sont suspendus en un point fixe situé de préférence à la verticale du centre géométrique dans le plan XY de la structure à construire, à une altitude très importante, supérieure à, par exemple, 2 à 5 fois la plus grande dimension de ladite structure dans le plan horizontal, additionnée de la hauteur de ladite structure. Ainsi, lors des déplacements de la tête de dépose 2a, le câble 4a n'est plus vertical, mais décrit un cône dont la section horizontale perpendiculaire à son axe vertical, correspond au pourtour de la structure en construction, l'angle au sommet dudit cône pouvant varier selon la position de la tête de dépose 2a, de δ=0° à δ =10-15°, voire plus. Dans cette configuration, le point de dépose du produit pâteux ne se trouve plus très exactement à la verticale de l'extrémité inférieure de la pyramide inversée, mais légèrement déportée. Ce déport ne perturbe pas de manière significative le processus de fabrication, car ledit déport n'est que de quelques millimètres, voire un ou deux centimètres, dès lors que l'on considère un point fixe situé à très grande hauteur, comme décrit précédemment. De plus, ledit déport est répétitif couche après couche et peut être simplement corrigé en modifiant au sein du dispositif de contrôle-commande 8, la trajectoire de ladite tête de dépose 2a.

Dans le cas de structures de moyennes ou de faibles dimensions, la grue à tour pourra être remplacée par une simple potence comportant un pylône 5a au sommet duquel est installé un palier solidaire d'une poutre 5b sensiblement horizontale. Un chariot 3 libre de circuler le long de ladite poutre supporte un palan 4 supportant le câble 4a. La poutre 5b est libre en rotation au sommet du pylône : les déplacements de la tête de dépose 2a entraînent le câble 4a qui n'est alors plus vertical, et fait un angle δ avec ladite verticale. La composante horizontale crée par cet angle δ au niveau du palan, agit à la fois sur le chariot qui se déplace alors naturellement le long de ladite poutre 5a, ainsi que sur la poutre dont l'angle ϕ par rapport au nord varie de manière automatique de telle sorte que ledit angle revienne sensiblement à zéro, c'est à dire que le câble soit sensiblement vertical. Plus l'angle δ est important, plus l'effet de rappel est important. L'angle résiduel, c'est à dire ne provoquant aucun mouvement du chariot 3, ni de la poutre 5a est de l'ordre de 3 à 5° et ne réduit pas de manière significative la précision du positionnement et ne perturbe pas réellement le processus de fabrication.

Les treuils M ont été décrits comme étant installés au sommet des pylônes P ou sur la structure de bâtiments existants, mais ils peuvent aussi être installés en tout autre position, par exemple à terre ; dans ce cas les câbles 7 reliant le guide 6 et les treuils sont tourné autour de poulies folles installées en tête de pylône ou en sommet de bâtiment existants.

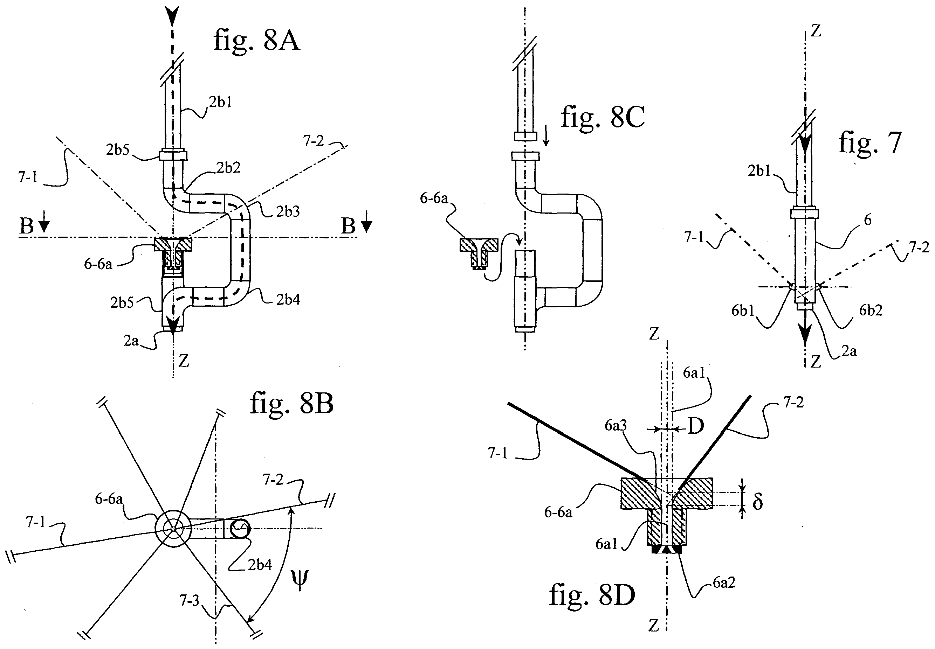

Comme représenté sur la figure 1, le câble de suspension 4a, la conduite d'amenée 2b1, le guide support 6 et la buse 2a sont situés sur un même axe sensiblement vertical ZZ sous l'effet du poids propre des divers éléments. De ce fait, les points d'accrochage des câbles doivent être situés sur la paroi externe du guide support 6. Sur la figure 7 on a représenté un dit guide support 6 relié aux câbles de positionnement 7-1 et 7-2 au niveau d'oreilles 6b1 et 6b2. Du fait que le diamètre dudit guide support est important, par exemple 60 à 100mm, les épures desdits câbles tendus se croisent en un point variable par rapport à l'axe ZZ dudit guide support lors des déplacements de la tête. Cette variation dans le plan horizontal constituera une erreur de positionnement, mais sera toujours inférieure au rayon dudit guide support ; - de plus, elle se cumulera avec une variation de l'altitude dudit point d'épure par rapport au positionnement effectif de la buse. Pour palier cet inconvénient qui peut conduire à des erreurs de positionnement de 25 à 60mm, voire plus, on utilisera avantageusement le dispositif décrit en référence aux figures 8A à 8D. Comme illustré sur la figure 8D, les câbles 7-1 et 7-2, et le cas échéant d'autres câbles de positionnement convergent vers l'axe du guide support 6a, pénètrent dans un trou de faible diamètre 6a1 traversant axialement de part en part ledit guide support, puis une plaque percée 6a2 où lesdits câbles sont alors bloqués par un dispositif non représenté. La face supérieure 6a3 est avantageusement profilée en forme d'entonnoir présentant un rayon de courbure tel que lesdits câbles de positionnement ne sont jamais en contact avec une arrête vive. Le diamètre D étant faible, par exemple 8 à 10mm, voire moins, les erreurs dues aux variations du point d'épure sont réduites de manière drastique par rapport au cas illustré en référence à la figure 7, où le diamètre de référence est de 60 à 100mm. Ces variations sont en effet de l'ordre de quelques millimètres, et donc peuvent être considérées comme négligeables.

Pour que l'ensemble câble de suspension 4a, conduite d'amenée 2b1 et buse 2a restent sur un même axe sensiblement vertical ZZ sous l'effet du poids propre des divers éléments, on dévie avantageusement la conduite d'amenée 2b1 au niveau du guide support 6. Cette déviation illustrée sur la figure 8A est effectuée de préférence dans un plan vertical au moyen d'une pluralité de coudes 2b2-2b3-2b4-2b5 associés à des parties droites de conduite. La figure 8B est une coupe selon le plan BB de la figure 8A, qui illustre les interférences limitées entre les câbles de positionnement 7 et la déviation de la conduite 2b1 dans la zone du guide support 6. On installe avantageusement un joint tournant 2b5 illustré sur la figure 8A de manière à ce que le dispositif d'évitement constitué de coudes 2b2-2b5 puisse tourner librement dès lors qu'il interfère avec l'un des deux câbles adjacents, à savoir 7-2 ou 7-3.

Cette invention a été décrite dans le cas de fabrication de structures à l'aide de produits pâteux, et plus particulièrement de mortiers à base de ciments ou de chaux, mais elle peut être avantageusement utilisée pour la réalisation de structures métalliques par fusion localisée d'un fil métallique, tel un fil de fer ou un fil de bronze, par un moyen de chauffage localisé et puissant, tel une torche à plasma, un TIG ou un laser. A cet effet, le moyen de chauffage est positionné en lieu et place de la buse 2a, la puissance électrique ou le rayon laser, ainsi que le métal étant transféré au moyen d'un ombilical en lieu et place de la conduite 2b d'amenée de produits pâteux. Ainsi, le moyen de chauffage localisé puissant, lors de sa progression, fusionne la couche N précédemment déposée et le métal d'apport pour former la couche N+1 qui se solidifiera rapidement en attente de la fabrication de la couche N+2 lors du passage suivant. Un tel dispositif est particulièrement adapté à la fabrication d'oeuvres d'art, par exemple des statues, ou de tout autre élément de construction ou de décoration de grandes dimensions.

## Revendications

1. Dispositif de dépôt de matériau pâteux destiné à la fabrication couche par couche d'une structure tridimensionnelle de grandes dimensions comportant :
- au moins trois premiers supports (P1,P2,P3) à distance du sol, non alignés, supportant respectivement trois premiers dispositifs de tensionnement de câbles (M1,M2, M3), et
- au moins un deuxième support (5b) maintenu à distance du sol (10), et supportant un deuxième dispositif de tensionnement (4), et
- une conduite d'amenée de matériau (2b), maintenue en suspension au-dessus du sol (10), apte à être déplacée au moins au-dessus de l'aire entre lesdits trois premiers supports, et
- une tête de dépose (2a) à l'extrémité de la dite conduite d'amenée (2b) suspendue, de préférence par un câble de suspension (4a), audit deuxième dispositif de tensionnement (4), et
- trois câbles dénommés câbles de positionnement (7, 7-1, 7-2,7-3) de longueurs respectives (L, L1,L2,L3) reliés à la dite tête de dépose au niveau d'un support guide (6), à une extrémité et respectivement aux trois premiers dispositifs de tensionnement (M1,M2,M3) à leur autre extrémité, les trois dits câbles de positionnement étant aptes à être tendus avec une longueur ajustable différentiée par actionnement différentié des trois premiers dispositifs de tensionnement (M1,M2,M3) et dudit deuxième dispositif de tensionnement (4), et aptes à définir de par leurs longueurs ajustables, une pyramide inversée à base supérieure triangulaire, la pointe inférieure de ladite pyramide inversée définissant un point de dépose dans l'espace situé sensiblement au niveau de la tête de dépose à l'extrémité inférieure de la conduite d'amenée (2b), le dit point de dépose étant apte à être déplacé dans les trois dimensions XYZ dans l'espace entre les trois premiers supports (P1,P2,P3), par actionnement différentié d'au moins l'un des trois dits premiers dispositifs de tensionnement (M1,M2,M3).

2. Dispositif selon la revendication 1, **caractérisé en ce que** au moins un des premiers supports est un pylône (P) sensiblement vertical, ancré dans ledit sol, supportant un premier treuil (M).

3. Dispositif selon la revendication 2, **caractérisé en ce que** chacun des premiers dispositifs de tensionnement (M) est mobile le long de son pylône respectif de manière à ce que la pyramide formée par les câbles (7) aie un angle au sommet tel que lesdits câbles restent sensiblement dans un plan horizontal.

4. Dispositif selon l'une des revendications 1 à 3, **caractérisé en ce que** ledit deuxième support (5b) est la flèche d'une grue à tour (5) ancrée dans le sol (10), la dite flèche supportant le dit premier chariot (3) et étant mobile en rotation par rapport à la tour.

5. Dispositif selon l'une des revendications 1 à 3, **caractérisé en ce que** ledit deuxième support (5b) est la poutre (20b) sensiblement horizontale d'un portique (20) mobile selon l'axe horizontal YY, de préférence perpendiculaire à l'axe XX de la poutre.

6. Dispositif selon l'une des revendications 1 à 5, **caractérisé en ce que** l'actionnement des trois premiers dispositifs de tensionnement et, de préférence l'actionnement dudit deuxième dispositif de tensionnement et de préférence encore le déplacement dudit premier chariot, sont pilotés en commande numérique depuis un poste de commande (8) pour déplacer ledit point de dépose.

7. Dispositif selon l'une des revendications 1 à 6, **caractérisé en ce que** la verticalité du câble de suspension (4a) est assurée par ajustement des déplacements du premier chariot (3) le long de la dite poutre et/ou déplacement de la dite poutre dans un plan horizontal en translation et/ou rotation, de préférence pilotés en commande numérique depuis un poste de commande (8).

8. Dispositif selon l'une des revendications 1 à 6, **caractérisé en ce que** la verticalité du câble de suspension (4a) est assuré par ajustement de la position dans le plan horizontal XY du premier chariot (3), sur la base d'informations issues de deux inclinomètres (11) solidaires dudit câble de suspension (4a) ou de la conduite (2b), lesdits inclinomètres étant situés dans deux plans verticaux de référence, de préférence perpendiculaires l'un à l'autre.

9. Dispositif selon l'une des revendications 1 à 8, **caractérisé en ce que** la conduite d'amenée (2b) est suspendue audit câble de suspension (4a) par l'intermédiaire d'un support de guidage du type dispositif en col de cygne, et la tête de dépose comprend une buse supportée par un support-guide (6) relié aux dits câbles de positionnement (7).

10. Dispositif selon les revendications 1 à 9, **caractérisé en ce que** le deuxième dispositif de tensionnement (4) est à tension contrôlée et supporte 40 à 95%, de préférence 70 à 85% du poids cumulé de la portion de conduite d'amenée (2b) en suspension sensiblement verticale remplie de produit pâteux, du support-guide (6) et de la tête de dépose (2a), et le cas échéant du col de cygne (4b), du câble de suspension (4a), et d'une portion de conduite (2b) en configuration de guirlande.

11. Dispositif selon l'une des revendications 1 à 10, **caractérisé en ce que** l'on installe au moins quatre dits premiers supports qui sont des pylônes (P) respectivement équipés d'une pluralité de premiers dispositifs de tensionnement de câble (M), lesquels sont respectivement reliés à une dite tête de dépose (2a) par une pluralité de câbles (7), trois câbles de ladite pluralité de câbles jouant de manière séquentielle le rôle de câbles de positionnement tendus, les autres câbles jouant le rôle de câbles secondaires, de préférence non tendus.

12. Dispositif selon l'une des revendications 1 à 11, **caractérisé en ce que** la conduite d'amenée (2b1) contourne le support guide (6-6a), ce dernier présentant un orifice axial de faible diamètre (6a1) où convergent l'ensemble des câbles de positionnement (7).

13. Procédé de fabrication d'une structure tridimensionnelle à partir de produits pâteux déposé à l'aide d'un dispositif selon l'une des revendications 1 à 12, **caractérisé en ce qu'**on fabrique une dite structure par dépose d'un dit matériau pâteux en couches minces successives, de préférence en couches horizontales superposées en déplaçant la dite tête de dépose, de préférence par extrusion, les trois dits câbles de positionnement étant tendus avec des longueurs (L1,L2,L3) ajustées par actionnement différentié des trois premiers dispositifs de tensionnement (M1,M2,M3) de manière à définir une pyramide inversée, à base triangulaire, le sommet de ladite pyramide définissant un point de référence dans l'espace situé sensiblement au niveau de la tête de dépose, à l'extrémité inférieure de la conduite d'amenée de matériau, le dit point de dépose se déplaçant dans les trois dimensions XYZ dans l'espace délimité par les trois premiers supports (P1, P2, P3), par actionnement différentié d'au moins un des trois premiers dispositifs de tensionnement (M1,M2,M3) et de préférence déplacement du premier chariot (3) supportant la tête de dépose (2a) et maintenant dans une position sensiblement verticale la conduite d'amenée de matériau (2b).

14. Procédé selon la revendication 13, **caractérisé en ce que** l'on réalise la fabrication de structures de plus petites dimensions dans un plan horizontal d'au moins 5 m, de préférence au moins 10m, pour la construction de bâtiments en dur.

15. Procédé selon les revendications 13 et 14, **caractérisé en ce que** le dit matériau pâteux est un mélange de produits inertes tels de l'argile, du sable, de la paille, des fibres de renfort, en plastique ou en acier, et comportant de préférence un liant hydraulique, tel un ciment pour former un mortier résistant, allégé ou non, et de préférence isolant.

## Patentansprüche

1. Vorrichtung zur Abscheidung eines pastösen Materials, das zur schichtweisen Herstellung einer dreidimensionalen Struktur mit großen Dimensionen bestimmt ist, umfassend:
- mindestens drei erste vom Boden beabstandete, nicht ausgerichtete Träger (P1, P2, P3), die jeweils drei erste Seilspannvorrichtungen (M1, M2, M3) tragen, und
- mindestens einen zweiten Träger (5b), der vom Boden (10) beabstandet gehalten wird und eine zweite Spannvorrichtung (4) trägt, und
- eine Materialzufuhrleitung (2b), die über dem Boden (10) hängend gehalten wird und dazu geeignet ist, mindestens über dem Bereich zwischen den drei ersten Trägern verschoben zu werden, und
- einen Abscheidekopf (2a) am Ende der Zufuhrleitung (2b), der vorzugsweise durch ein Hängeseil (4a) an der zweiten Spannvorrichtung (4) aufgehängt ist, und
- drei als Positionierseile (7, 7-1, 7-2, 7-3) bezeichnete Seile mit den jeweiligen Längen (L, L1, L2, L3), die mit dem Abscheidekopf im Bereich einer Tragführung (6) an einem Ende und jeweils mit den drei ersten Spannvorrichtungen (M1, M2, M3) an ihrem anderen Ende verbunden sind, wobei die drei Positionierseile dazu geeignet sind, mit einer unterschiedlichen Länge, die durch unterschiedliche Betätigung der drei ersten Spannvorrichtungen (M1, M2, M3) und der zweiten Spannvorrichtung (4) einstellbar ist, gespannt zu werden, und dazu geeignet sind, durch ihre einstellbaren Längen eine umgedrehte Pyramide mit oben liegender dreieckiger Basis zu definieren, wobei die unten liegende Spitze der umgedrehten Pyramide einen Abscheidungspunkt in dem Raum definiert, der sich im Wesentlichen im Bereich des Abscheidekopfs an dem unteren Ende der Zufuhrleitung (2b) befindet, wobei der Abscheidungspunkt dazu geeignet ist, in den drei Dimensionen XYZ in dem Raum zwischen den drei ersten Trägern (P1, P2, P3) durch unterschiedliche Betätigung mindestens einer der drei ersten Spannvorrichtungen (M1, M2, M3) verschoben zu werden.

2. Vorrichtung nach Anspruch 1, **dadurch gekennzeichnet, dass** mindestens einer der ersten Träger ein im Wesentlichen vertikaler Mast (P) ist, der im Boden verankert ist und eine erste Seilwinde (M) trägt.

3. Vorrichtung nach Anspruch 2, **dadurch gekennzeichnet, dass** jede der ersten Spannvorrichtungen (M) entlang ihres jeweiligen Masts auf eine Weise beweglich ist, dass die durch die Seile (7) gebildete Pyramide einen solchen Spitzenwinkel aufweist, dass die Seile im Wesentlichen in einer horizontalen Ebene bleiben.

4. Vorrichtung nach einem der Ansprüche 1 bis 3, **dadurch gekennzeichnet, dass** der zweite Träger (5b) der Ausleger eines Drehkrans (5) ist, der im Boden (10) verankert ist, wobei der Ausleger die erste Laufkatze (3) trägt und drehbar in Bezug auf den Turm beweglich ist.

5. Vorrichtung nach einem der Ansprüche 1 bis 3, **dadurch gekennzeichnet, dass** der zweite Träger (5b) der im Wesentlichen horizontale Querträger (20b) eines Portals (20) ist, das entlang der horizontalen Achse YY, vorzugsweise senkrecht auf die Achse XX des Querträgers, beweglich ist.

6. Vorrichtung nach einem der Ansprüche 1 bis 5, **dadurch gekennzeichnet, dass** die Betätigung der drei ersten Spannvorrichtungen und vorzugsweise die Betätigung der zweiten Spannvorrichtung und vorzugsweise auch die Verschiebung der ersten Laufkatze von einer Steuerzentrale (8) aus computergesteuert werden, um den Abscheidungspunkt zu verschieben.

7. Vorrichtung nach einem der Ansprüche 1 bis 6, **dadurch gekennzeichnet, dass** durch Einstellung der Verschiebungen der ersten Laufkatze (3) entlang des Querträgers und/oder der translatorischen Verschiebung des Querträgers in einer horizontalen Ebene und/oder Drehung, vorzugsweise von einer Steuerzentrale (8) aus computergesteuert, sichergestellt wird, dass das Hängeseil (4a) vertikal ist.

8. Vorrichtung nach einem der Ansprüche 1 bis 6, **dadurch gekennzeichnet, dass** durch Einstellung der Position der ersten Laufkatze (3) in der horizontalen Ebene XY auf Grundlage der Informationen, die von zwei Neigungsmessern (11) ausgegeben werden, die an dem Hängeseil (4a) oder der Leitung (2b) befestigt sind, wobei die Neigungsmesser sich in zwei vertikalen Bezugsebenen befinden, die vorzugsweise senkrecht aufeinander stehen, sichergestellt wird, dass das Hängeseil (4a) vertikal ist.

9. Vorrichtung nach einem der Ansprüche 1 bis 8, **dadurch gekennzeichnet, dass** die Zufuhrleitung (2b) mittels eines Führungsträgers vom Schwanenhalstyp an dem Hängeseil (4a) aufgehängt ist, und der Abscheidekopf eine Düse umfasst, die von einer Tragführung (6) getragen wird, die mit den Positionierseilen (7) verbunden ist.

10. Vorrichtung nach den Ansprüchen 1 bis 9, **dadurch gekennzeichnet, dass** die zweite Spannvorrichtung (4) spannungsgesteuert ist und 40 bis 95 %, vorzugsweise 70 bis 85 % des Gesamtgewichts des Teils der Zufuhrleitung (2b), der im Wesentlichen vertikal hängt und mit pastösem Material gefüllt ist, der Tragführung (6) und des Abscheidekopfs (2a), und gegebenenfalls des Schwanenhalses (4b), des Hängeseils (4a) und eines Teils der Leitung (2b) in Schlangenkonfiguration trägt.

11. Vorrichtung nach einem der Ansprüche 1 bis 10, **dadurch gekennzeichnet, dass** zumindest vier der ersten Träger installiert werden, die Masten (P) sind, die jeweils mit einer Vielzahl von ersten Seilspannvorrichtungen (M) ausgerüstet sind, die jeweils mit einem Abscheidekopf (2a) durch eine Vielzahl von Seilen (7) verbunden sind, wobei drei Seile der Vielzahl von Seilen sequenziell die Rolle von gespannten Positionierseilen übernehmen, und die übrigen Seile die Rolle von sekundären, vorzugsweise nicht gespannten Seilen übernehmen.

12. Vorrichtung nach einem der Ansprüche 1 bis 11, **dadurch gekennzeichnet, dass** die Zufuhrleitung (2b1) die Tragführung (6-6a) umgibt, wobei letztere eine axiale Öffnung (6a1) mit geringem Durchmesser aufweist, wo alle Positionierseile (7) zusammenkommen.

13. Verfahren zur Herstellung einer dreidimensionalen Struktur aus pastösen Produkten, die mithilfe einer Vorrichtung nach einem der Ansprüche 1 bis 12 abgeschieden werden, **dadurch gekennzeichnet, dass** eine solche Struktur durch Abscheiden eines pastösen Materials in dünnen aufeinanderfolgenden Schichten hergestellt wird, vorzugsweise in horizontalen übereinander gelagerten Schichten, durch Verschieben des Abscheidekopfs und vorzugsweise durch Extrusion, wobei die drei Positionierseile mit Längen (L1, L2, L3) gespannt werden, die durch unterschiedliche Betätigung der drei ersten Spannvorrichtungen (M1, M2, M3) auf eine Weise eingestellt werden, um eine umgedrehte Pyramide mit dreieckiger Basis zu definieren, wobei die Spitze der Pyramide einen Bezugspunkt in dem Raum definiert, der sich im Wesentlichen im Bereich des Abscheidekopfs an dem unteren Ende der Materialzufuhrleitung befindet, wobei der Abscheidungspunkt in den drei Dimensionen XYZ in dem Raum, der durch die drei ersten Träger (P1, P2, P3) begrenzt wird, durch unterschiedliche Betätigung mindestens einer der drei ersten Spannvorrichtungen (M1, M2, M3) und vorzugsweise durch Verschiebung der ersten Laufkatze (3), die den Abscheidekopf (2a) trägt, und durch Halten der Materialzufuhrleitung (2b) in einer im Wesentlichen vertikalen Position verschoben wird.

14. Verfahren nach Anspruch 13, **dadurch gekennzeichnet, dass** die Herstellung von Strukturen mit kleineren Dimensionen in einer horizontalen Ebene von mindestens 5 m, vorzugsweise mindestens 10m, für die Konstruktion von festen Bauwerken erfolgt.

15. Verfahren nach den Ansprüchen 13 und 14, **dadurch gekennzeichnet, dass** das pastöse Material eine Mischung von inerten Produkten ist, etwa Lehm, Sand, Stroh, Verstärkungsfasern aus Kunststoff oder aus Stahl, und vorzugsweise ein hydraulisches Bindemittel wie etwa einen Zement umfasst, um einen widerstandsfähigen und vorzugsweise dämmenden Mörtel zu bilden, der leicht ist oder nicht.

## Claims

1. A device for depositing pasty material for fabricating a three-dimensional structure of large dimensions layer by layer, the device comprising:
• at least three first supports (P1, P2, P3) at a distance from the ground and not in alignment supporting three respective first cable tensioning devices (M1, M2, M3); and
• at least one second support (5b) kept at a distance from the ground (10) and supporting a second tensioning device (4); and
• a material feed pipe (2b) held suspended above the ground (10) and suitable for being moved at least over the area between said three first supports; and
• a deposition head (2a) at the end of said feed pipe (2b) suspended from said second tensioning device (4), preferably by a suspension cable (4a); and
• three cables referred to as "positioning" cables (7, 7-1, 7-2, 7-3) of respective lengths (L, L1, L2, L3), each connected at one end to said deposition head via a support guide (6), and each connected to a respective one of the three first tensioning devices (M1, M2, M3) at its other end, the three said positioning cables being suitable for being tensioned with different adjustable lengths by different actuation of the three first tensioning devices (M1, M2, M3) and of said second tensioning device (4), and being suitable by means of their adjustable lengths for defining an upside-down pyramid with a triangular top base, the bottom point of said upside-down pyramid defining a deposition point in three-dimensional space that is situated substantially at the deposition head at the bottom end of the feed pipe (2b), said deposition point being suitable for being moved in the three dimensions XYZ of three-dimensional space between the three first supports (P1, P2, P3) by different actuation of at least one of the three said first tensioning devices (M1, M2, M3).

2. A device according to claim 1, **characterized in that** at least one of the first supports is a substantially vertical pylon (P), anchored in said ground, and supporting a first winch (M).

3. A device according to claim 2, **characterized in that** each of the first tensioning devices (M) is movable along its respective pylons so that the pyramid formed by the cables (7) has an angle at the apex such that said cables remain substantially in a horizontal plane.

4. A device according to any one of claims 1 to 3, **characterized in that** said second support (5b) is the boom of a tower crane (5) anchored to the ground (10), said boom supporting said first carriage (3) and being movable in turning relative to the tower.

5. A device according to any one of claims 1 to 3, **characterized in that** said second support (5b) is a substantially horizontal beam (20b) of a gantry (20) that is movable along a horizontal axis YY, that is preferably perpendicular to the axis XX of the beam.

6. A device according to any one of claims 1 to 5, **characterized in that** the three first tensioning devices are actuated, and preferably said second tensioning device is actuated, and more preferably said first carriage is moved under digital control by a control station (8) for moving said deposition point.

7. A device according to any one of claims 1 to 6, **characterized in that** the suspension cable (4a) is kept vertical by adjusting the movements of the first carriage (3) along said boom and/or the movement of said boom in a horizontal plane in translation and/or in rotation, preferably under digital control from a control station (8) .

8. A device according to any one of claims 1 to 6, **characterized in that** the suspension cable (4a) is kept vertical by adjusting the position in the horizontal XY plane of the first carriage (3) on the basis of information from two inclinometers (11) secured to said suspension cable (4a) or to said pipe (2b), said inclinometers being situated in two vertical reference planes, which are preferably mutually perpendicular.

9. A device according to any one of claims 1 to 8, **characterized in that** the feed pipe (2b) is suspended from said suspension cable (4a) via a support for guiding the swan-neck type device, and the deposition head comprises a nozzle supported by a support guide (6) connected to said positioning cables (7).

10. A device according to any one of claims 1 to 9, **characterized in that** the second tensioning device (4) is of controlled tension and supports 40% to 95%, preferably 70% to 85% of the total weight of the portion of the feed pipe (2b) that is suspended substantially vertically and is filled with pasty substance, plus the weights of the support guide (6), and of the deposition head (2a), possibly together with the weights of the swan neck (4b), of the suspension cable (4a), and of a pipe portion (2b) in a festoon configuration.

11. A device according to one of claims 1 to 10, **characterized in that** at least four said first supports which are pylons (P) are installed, respectively fitted with a plurality of first cable tensioning devices (M) that are respectively connected to a said deposition head (2a) by a plurality of cables (7), three cables of said plurality of cables acting sequentially to perform the role of tensioned positioning cables, the other cables performing the role of secondary cables that are preferably not tensioned.

12. A device according to any one of claims 1 to 11, **characterized in that** the feed pipe (2b1) passes around the support guide (6-6a), the support guide presenting an axial orifice of small diameter (6a1) onto which the set of positioning cables (7) converge.

13. A method of fabricating three-dimensional structures from pasty substances deposited using a device according to any one of claims 1 to 12, the method being **characterized in that** a said structure is fabricated by depositing a said pasty material in successive thin layers, preferably by extrusion, preferably in superposed horizontal layers by moving said deposition head, the three said positioning cables being tensioned with lengths (L1, L2, L3) that are adjusted by different actuation of the three first tensioning devices (M1, M2, M3) so as to define a preferably upside-down pyramid of triangular base with the apex of said pyramid defining a reference point in three-dimensional space situated substantially at the deposition head, at the bottom end of the material feed pipe, said deposition point being moved in the three dimensions XYZ of the three-dimensional space defined by the three first supports (P1, P2, P3) by different actuation of at least one of the three first tensioning devices (M1, M2, M3) and preferably by moving the first carriage (3) supporting the deposition head (2a) and holding the material feed pipe (2b) in a position that is substantially vertical.

14. A method according to claim 13, **characterized in that** structures are fabricated that have smaller dimensions in a horizontal plane of at least 5 m, preferably at least 10 m, for making a masonry construction.

15. A method according to claims 13 and 14, **characterized in that** said pasty material is a mixture of inert substances such as clay, sand, straw, reinforcing fibers made of plastics material or of steel, and preferably including a hydraulic binder, such as a cement, so as to form an optionally lightweight mortar that is strong and preferably insulating.
